# EUROPÄISCHE PATENTSCHRIFT

(11) **EP 3 472 879 B1**
(45) Veröffentlichungstag und Bekanntmachung des Hinweises auf die Patenterteilung: **18.08.2021**
(21) Anmeldenummer: 17725617.9
(22) Anmeldetag: 28.05.2017
(51) Int. Cl.: H01M 10/04

(54) **ELEKTROCHEMISCHE ZELLE MIT OPTIMIERTEM INNENWIDERSTAND**
ELECTROCHEMICAL CELL WITH OPTIMIZED INTERNAL RESISTANCE
CELLULE ELECTROCHIMIQUE A RESISTANCE INTERNE OPTIMISEE

(30) Priorität: 16.06.2016 EP 16174720
(43) Veröffentlichungstag der Anmeldung: 24.04.2019
(73) Patentinhaber: VARTA Microbattery GmbH, 73479 Ellwangen Jagst (DE)
(72) Erfinder: WAGNER, Horst, 73494 Rosenberg (DE); SENZ, Stefan, 73485 Unterschneidheim (DE); PYTLIK, Edward, 73479 Ellwangen (DE); HADLIK, Moritz, 73479 Neuler (DE); FÜRST, Martin, 73492 Rainau-Schwabsberg (DE); ENSLING, David, 73479 Ellwangen (DE)
(74) Vertreter: Patentanwaltskanzlei Cartagena
(86) Internationale Anmeldenummer: PCT/EP2017/062818
(87) Internationale Veröffentlichungsnummer: WO 2017/215900

(56) Entgegenhaltungen:
- EP-A1- 1 102 337
- EP-A1- 2 133 942
- JP-A- 2000 323 117
- JP-A- 2004 055 511
- JP-A- 2004 119 330
- US-A1- 2007 196 730
- US-A1- 2014 087 225

## Beschreibung

Die nachfolgend beschriebene Erfindung betrifft eine elektrochemische Zelle mit einem bandförmigen Elektroden-Separator-Verbund der Sequenz Anode/Separator/ Kathode, der in Form eines Wickels mit zwei endständigen Stirnseiten vorliegt.

Derartige Zellen sind grundsätzlich bereits bekannt, beispielsweise aus der DE 10 2009 060 800 A1. In dieser deutschen Patentanmeldung sind zylindrische Wickel aus Elektroden-Separator-Verbünden beschrieben, die in zylindrische Metallgehäuse eingesetzt werden. Zur elektrischen Kontaktierung der Elektroden werden Stromkollektoren eingesetzt, die mit Elektrodenaktivmaterialien beladen sind. Die Stromkollektoren sind jeweils mit einer Metallfolie verschweißt, die als separater Stromableiter fungiert und die Stromkollektoren elektrisch mit dem Gehäuse verbindet.

Die in der DE 10 2009 060 800 A1 beschriebene Vorgehensweise zur elektrischen Kontaktierung der Elektroden ist effizient und kostengünstig. In bestimmten Anwendungsfällen bietet sie aber Nachteile. Problematisch ist beispielsweise, dass die elektrische Anbindung der Elektroden über nur eine Stromableiterfolie erfolgt, die zudem meist an ein Ende des Wickels angeschweißt ist. Wenn von derart angebundenen Elektroden hohe Ströme in kurzer Zeit gespeichert oder abgegeben werden sollen, stößt die beschriebene Lösung sehr schnell an ihre Grenzen.

Aus der JP 2004-119330 A ist eine zylindrische Zelle bekannt, die einen Elektroden-Separator-Verbund in Form eines spiralförmigen Wickels umfasst. An den Stirnseiten des Wickels sind kreisförmige Metallplatten angeordnet. Die Kontaktplatten weisen mehrere ins Zentrum der Platten gerichtete Vertiefungen auf. Am tiefsten Punkt der Vertiefungen stehen die Platten in unmittelbarem Kontakt mit den Längsrändern der Elektroden des Wickels und sind mit diesen mittels punktförmiger Verschweißung verbunden.

Ähnliche Konstruktionen mit stirnseitigen Metallplatten sind auch aus der EP 2133942 A1, der US 2014/0087225 A1, der JP 2004-55511 A und der EP 1102337 A1 bekannt.

Der vorliegenden Erfindung lag die Aufgabe zugrunde, elektrochemische Zellen mit bandförmigem Elektroden-Separator-Verbund der Sequenz Anode / Separator / Kathode bereitzustellen, die sich gegenüber dem zitierten Stand der Technik durch eine verbesserte Strombelastbarkeit auszeichnen.

Diese Aufgabe wird gelöst durch die elektrochemische Zelle mit den Merkmalen des Anspruchs 1. Bevorzugte Ausführungsformen der erfindungsgemäßen Zelle sind in den abhängigen Ansprüchen 2 bis 6 angegeben.

Die erfindungsgemäße elektrochemische Zelle zeichnet sich stets durch die folgenden Merkmale aus:
- Sie umfasst einen bandförmigen Elektroden-Separator-Verbund der Sequenz Anode / Separator/ Kathode. In bevorzugten Ausführungsformen weist der Verbund die Sequenz Anode / Separator/ Kathode / Separator /Anode oder Kathode / Separator / Anode / Separator / Kathode auf.
- Die Anode umfasst einen bandförmigen metallischen Anodenstromkollektor, der mit einem negativem Elektrodenaktivmaterial beladen ist, und die Kathode umfasst einen bandförmigen metallischen Kathodenstromkollektor, der mit einem positiven Elektrodenaktivmaterial beladen ist. Die Elektrodenaktivmaterialien dienen der Speicherung von Energie. Die Stromkollektoren dienen der elektrischen Kontaktierung der Elektroden sowie der thermischen und mechanischen Anbindung.
- Wie die eingangs erwähnten gattungsgemäßen Zellen liegt auch der Elektroden-Separator-Verbund einer erfindungsgemäßen Zelle in Form eines Wickels mit zwei endständigen Stirnseiten vor.

Bevorzugt handelt es sich bei der erfindungsgemäßen elektrochemischen Zelle um eine sekundäre Zelle, also eine wieder aufladbare Zelle. Als Elektrodenaktivmaterial kommen für die erfindungsgemäße Zelle daher vorzugsweise die Aktivmaterialien in Betracht, die in sekundären elektrochemischen Zellen zum Einsatz kommen können.

Besonders bevorzugt handelt es sich bei der elektrochemischen Zelle um eine Lithium-Ionen-Zelle. In diesem Fall ist das negative Elektrodenaktivmaterial beispielsweise Graphit und das positive Elektrodenaktivmaterial beispielsweise Lithiumkobaltoxid.

In einerweiteren bevorzugten Ausführungsform kann es sich bei der erfindungsgemäßen Zelle um eine Nickel-Metallhydrid-Zelle handeln, die auf der Seite der negativen Elektrode eine Wasserstoffspeicherlegierung aufweist und auf der Seite der positiven Elektrode Nickelhydroxid / Nickeloxyhydroxid.

Weiterhin können die Elektroden der erfindungsgemäße Zelle wie die Elektroden der in der WO 2016/005529 A1 und in der WO 2016/005528 A2 beschriebenen Systeme ausgebildet sein. In diesen Dokumenten sind Systeme beschrieben, bei denen die positive Elektrode auf Nickeloxyhydroxid / Nickelhydroxid basiert während die negative Elektrode eine Mischung aus Aktivkohle und einer Wasserstoffspeicherlegierung oder eine Mischung aus Aktivkohle und Eisen in metallischerund/oderoxidierter Form enthält.

Besonders zeichnet sich die erfindungsgemäße Zelle dadurch aus, dass
- innerhalb des Elektroden-Separator-Verbunds die Anode und die Kathode versetzt zueinander angeordnet sind, so dass ein Längsrand des Anodenstromkollektors aus einer der endständigen Stirnseiten und ein Längsrand des Kathodenstromkollektors aus der anderen der endständigen Stirnseiten austritt,
- Die erfindungsgemäße Zelle eine Kontaktplatte aufweist, die auf einem der Längsränder aufliegt, so dass sich eine linienartige Kontaktzone ergibt, und
- Die Kontaktplatte mit dem Längsrand entlang dieser linienartigen Kontaktzone durch Verschweißung verbunden ist.

Bei der Herstellung von Elektroden-Separator-Verbünden wird üblicherweise darauf geachtet, dass Elektroden und Stromkollektoren derart miteinander kombiniert werden, dass es nicht zu einem einseitigen Überstehen entgegengesetzt gepolter Stromkollektoren kommt, da dies die Kurzschlussgefahr erhöhen kann. Bei der beschriebenen versetzten Anordnung ist die Kurzschlussgefahr jedoch minimiert, da die entgegengesetzt gepolten Stromkollektoren aus sich gegenüberliegenden Stirnseiten des Wickels austreten.

Erfindungsgemäß macht man sich den aus der versetzten Anordnung resultierenden Überstand der Stromkollektoren zunutze, indem man sie mittels eines entsprechenden Stromableiters großflächig kontaktiert. Als Stromableiter kommt hierbei die erwähnte Kontaktplatte zum Einsatz.

Über die Kontaktplatte ist es möglich, einen Stromkollektor und damit auch eine dazugehörige bandförmige Elektrode über seine / ihre gesamte Länge elektrisch zu kontaktieren. Dies senkt den Innenwiderstand innerhalb der erfindungsgemäßen Zelle sehr deutlich. Die beschriebene Anordnung kann das Auftreten großer Ströme somit sehr viel besser abfangen als aus dem Stand der Technik bekannte Zellen. Mit minimiertem Innenwiderstand reduzieren sich thermische Verluste bei hohen Strömen. Zudem wird die Abfuhr thermischer Energie über die Pole begünstigt.

Die Kontaktplatte kann wiederum mit einem Pol der erfindungsgemäßen Zelle, beispielsweise einem Gehäusepol, verbunden sein.

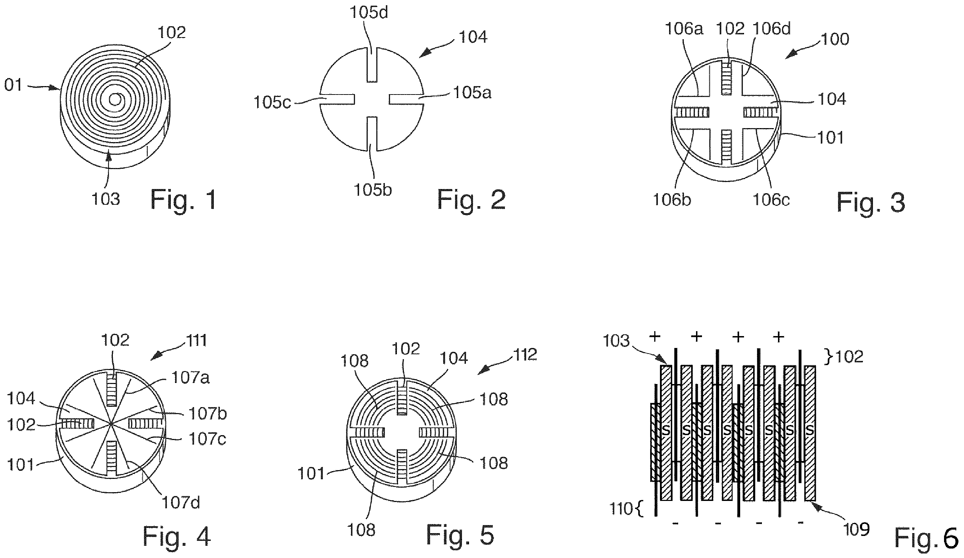

Die erfindungsgemäße Zelle ist in bevorzugten Ausführungsformen als Knopfzelle ausgebildet und weist ein metallisches Gehäuse aus zwei Gehäuseteilen aus, die durch eine elektrisch isolierende Dichtung voneinander isoliert sind, beispielsweise wie es in Fig. 1 der DE 10 2009 060 800 A1 dargestellt ist. In diesem Fall kann die Kontaktplatte beispielsweise mit dem positiv gepolten Gehäusehalbteil verbunden sein. Die Zelle kann aber auch eine Rundzelle sein, also eine Höhe aufweisen, die größer als ihr Durchmesser ist.

Es gibt mehrere Möglichkeiten, wie die Kontaktplatte mit dem Längsrand verbunden werden kann.

Die Kontaktplatte ist mit dem Längsrand entlang der linienartigen Kontaktzone über mindestens eine Schweißnaht verbunden. Der Längsrand umfasst erfindungsgemäß einen oder mehrere Abschnitte, die jeweils über ihre gesamte Länge über eine Schweißnaht durchgehend mit der Kontaktplatte verbunden sind.

Weiterhin ist erfindungsgemäß, dass sich der oder die mit der Kontaktplatte über ihre gesamte Länge durchgehend verbundenen Abschnitte über mindestens 25 % der Gesamtlänge des Längsrandes erstrecken.

In einer möglichen Weiterbildung erstrecken sich der / die mit der Kontaktplatte über ihre gesamte Länge durchgehend verbundenen Abschnitte über mindestens 50 %, besonders bevorzugt über mindestens 75 %, der Gesamtlänge des Längsrandes.

Ganz besonders bevorzugt ist der Längsrand über seine gesamte Länge durchgehend mit der Kontaktplatte verschweißt.

In nicht erfindungsgemäßen Ausführungsformen ist die Kontaktplatte mit dem Längsrand über eine Vielzahl von Schweißpunkten verbunden. In diesem Fall ist es bevorzugt, dass die Schweißpunkte mindestens eine Linie bilden, insbesondere mindestens eine Gerade, welche die linienartige Kontaktzone kreuzt.

Der Elektroden-Separator-Verbund liegt erfindungsgemäß in Form eines spiralförmigen Wickels vor. Hieraus resultiert, dass die aus den endständigen Stirnseiten des Wickels austretenden Längsränder des Anodenstromkollektors und des Kathodenstromkollektors ebenfalls eine spiralförmige Geometrie aufweisen. Analoges gilt für die linienartige Kontaktzone, entlang der die Kontaktplatte mit dem Längsrand verschweißt ist.

Bei dem Anodenstromkollektor und/oder dem Kathodenstromkollektor handelt es sich in bevorzugten Ausführungsformen um einen Schaum, ein Gewebe, ein Netz, ein Gitter, ein Vlies, einen Filz oder eine Folie. Besonders bevorzugt handelt es sich bei dem Anodenstromkollektor und/oder dem Kathodenstromkollektor um einen Metallschaum.

In weiteren bevorzugten Ausführungsformen weisen der Anodenstromkollektor und/oder der Kathodenstromkollektor eine Dicke im Bereich von 4 µm bis 700 µm auf.

Dicken im Bereich von 4 µm bis 25 µm sind insbesondere dann bevorzugt, wenn es sich bei dem Anodenstromkollektor und/oder dem Kathodenstromkollektor um eine Metallfolie handelt, insbesondere eine Folie aus Nickel, Aluminium oder Kupfer.

Wenn es sich bei dem Anodenstromkollektor und/oder dem Kathodenstromkollektor um einen Schaum, ein Gewebe, ein Netz, ein Gitter, ein Vlies oder einen Filz handelt, so können die Dicken im Bereich von 30 µm bis 700 µm liegen.

Wenn es sich bei dem Anodenstromkollektor und/oder dem Kathodenstromkollektor um einen Schaum, ein Gewebe, ein Netz, ein Gitter, ein Vlies oder einen Filz handelt, so weisen bevorzugt auch die Anode und/oder die Kathode selbst Dicken im Bereich von 30 µm bis 700 µm auf.

Die Dickenverhältnisse zwischen Anode und Kathode ergeben sich häufig in Abhängigkeit der verwendeten Aktivmaterialien und derjeweiligen spezifischen Kapazität der Aktivmaterialien. Für EDLC- (EDLC = electric double layer capacitor), Lithium-Ionen- und NiMH-basierte Systeme werden Dicken zwischen 50 und 300 µm bevorzugt. Asymmetrische Systeme wie Lithium-Ionen-Kondensatoren oder wässrige Ni(OH)₂-basierte Kondensatoren benötigen Aktivkohle-Elektroden mit bevorzugt 200 - 700 µm Dicke und dünne Redox-Gegenelektroden (Graphit, Ni(OH)2, Lithium-Titanat, MnO2, etc.) mit bevorzugt 30 - 200 µm Dicke.

Der Anodenstromkollektor und/oder der Kathodenstromkollektor bestehen bevorzugt aus Aluminium, Titan, Kupfer, Nickel, Edelstahl oder aus vernickeltem Stahl.

In einigen bevorzugten Ausführungsformen weist die erfindungsgemäße Zelle mindestens eines der folgenden Merkmale auf:
- Die Kontaktplatte ist eine Metallplatte mit einer Dicke im Bereich von 200 µm bis 1000 µm, bevorzugt 400 - 500µm.
- Die Kontaktplatte besteht aus Aluminium, Titan, Nickel, Edelstahl oder vernickeltem Stahl.

Die Kontaktplatte weist mindestens einen Schlitz und/oder mindestens eine Perforierung auf. Diese dienen dazu, einer Verformung der Platte bei der Herstellung der Schweißverbindung entgegenzuwirken.

Besonders bevorzugt weist die Kontaktplatte die Dicke im Bereich von 200 µm bis 1000 µm und den mindestens einen Schlitz und/oder die mindestens eine Perforierung auf.

Wenn vorliegend von einer Perforierung der Kontaktplatte die Rede ist, so bedeutet dies vorzugsweise, dass die Kontaktplatte gelocht ist, also mehrere Löcher aufweist, insbesondere in einer regelmäßigen Anordnung. Beispielsweise kann die Kontaktplatte als linienförmige Perforierung eine Abfolge von Löchern entlang einer Linie, insbesondere entlang einer Gerade, aufweisen, wobei es bevorzugt ist, dass die Löcher in regelmäßigen Abständen in die Platte eingebracht sind.

Wenn vorliegend von einem Schlitz in der Kontaktplatte die Rede ist, so bedeutet dies vorzugsweise, dass die Kontaktplatte eine längliche Durchbrechung, bevorzugt eine gerade längliche Durchbrechung, aufweist, insbesondere eine längliche Durchbrechung gleichbreitender Breite.

In bevorzugten Ausführungsformen hat die Kontaktplatte die Form einer Scheibe, insbesondere die Form einer kreisförmigen oder zumindest näherungsweise kreisförmigen Scheibe. Sie weist dann also einen äußeren kreisförmigen oder zumindest näherungsweise kreisförmigen Scheibenrand auf. Unter einer näherungsweise kreisförmigen Scheibe soll hierbei insbesondere eine Scheibe verstanden werden, die die Form eines Kreises mit mindestens einem abgetrennten Kreissegment, bevorzugt mit zwei bis vier abgetrennten Kreissegmenten, aufweist.

In weiteren bevorzugten Ausführungsformen kann die Kontaktplatte beispielsweise aber auch die Form eines Polygons, bevorzugt eines regelmäßigen Polygons, insbesondere eines regelmäßigen Polygons mit 4 bis 10 Ecken und Seiten, aufweisen.

Die Kontaktplatte, insbesondere wenn sie als kreisförmige oder zumindest näherungsweise kreisförmige Scheibe ausgebildet ist oder die Form eines Polygons aufweist, kann in bevorzugten Ausführungsformen eine zentrale, in ihrem Zentrum liegende Öffnung, insbesondere in Form eines kreisrunden Lochs, aufweisen. Als kreisförmige oder zumindest näherungsweise kreisförmige Scheiben ausgebildete Kontaktplatten weisen dann einen äußeren kreisförmigen oder zumindest näherungsweise kreisförmigen Scheibenrand und einen inneren, bevorzugt kreisrunden, Scheibenrand auf.

Insbesondere wenn die Kontaktplatte als kreisförmige oder zumindest näherungsweise kreisförmige Scheibe ausgebildet ist und den erwähnten äußeren kreisförmigen oder zumindest näherungsweise kreisförmigen Scheibenrand aufweist, dann weist sie auch den mindestens einen Schlitz und/oder die mindestens eine Perforierung, insbesondere die mindestens eine linienförmige Perforierung, auf.

Der mindestens eine Schlitz und/oder die mindestens eine Perforierung sind, bevorzugt ausgehend von dem äußeren Scheibenrand, radial in Richtung des Zentrums der Scheibe ausgerichtet. Bevorzugt weisen drei oder mehr Schlitze ausgehend von unterschiedlichen Punkten auf dem äußeren Scheibenrand diese Orientierung auf und unterteilen dabei die Scheibe in mehrere, bevorzugt gleich große Sektoren, insbesondere Kreissektoren.

Wenn die Kontaktplatte als kreisförmige oderzumindest näherungsweise kreisförmige Scheibe ausgebildet ist und die zentrale Öffnung aufweist, so ist es auch möglich, dass sich der mindestens eine Schlitz und/oder die mindestens eine Perforierung ausgehend von dem inneren Scheibenrand radial nach außen in Richtung des äußeren Scheibenrands erstrecken.

Es ist bevorzugt, dass die Scheibe 2 bis 6 Schlitze oder 2 bis 6 Perforierungen, besonders bevorzugt 4 Schlitze oder 4 Perforierungen, aufweist.

Durch die Schlitze und/oder Perforierungen ist gewährleistet, dass sich die Kontaktplatte bei Schweißvorgängen nicht verzieht. Darüber hinaus ist gewährleistet, dass die Kontaktplatte das Eindringen von Elektrolyt in den wickelförmigen Elektroden-Separator-Verbund nicht behindert.

In einer besonders bevorzugten Ausführungsform weist die erfindungsgemäße Zelle mindestens eines der folgenden Merkmale, insbesondere eine Kombination aus den folgenden Merkmalen, auf:
- Der Elektroden-Separator-Verbund liegt in Form eines spiralförmigen Wickels mit zwei endständigen Stirnseiten vor.
- Die aus den endständigen Stirnseiten des Wickels austretenden Längsränder des Anodenstromkollektors und des Kathodenstromkollektors weisen eine spiralförmige Geometrie auf.
- Die Zelle weist eine erste Kontaktplatte auf, die auf dem Längsrand des Anodenstromkollektors aufliegt, so dass sich eine linienartige erste Kontaktzone mit spiralförmiger Geometrie ergibt.
- Die Zelle weist eine zweite Kontaktplatte auf, die auf dem Längsrand des Kathodenstromkollektors aufliegt, so dass sich eine linienartige zweite Kontaktzone mit spiralförmiger Geometrie ergibt.
- Bei dem Anodenstromkollektor und dem Kathodenstromkollektor handelt es sich jeweils um einen Schaum.
- Der Längsrand des Anodenstromkollektors umfasst einen oder mehrere Abschnitte, die jeweils über ihre gesamte Länge über eine Schweißnaht entlang der Kontaktzone durchgehend mit der ersten Kontaktplatte verbunden sind.
- Der Längsrand des Kathodenstromkollektors umfasst einen oder mehrere Abschnitte, die jeweils über ihre gesamte Länge über eine Schweißnaht entlang der Kontaktzone durchgehend mit der zweiten Kontaktplatte verbunden sind.

In einer nicht erfindungsgemäßen Ausführungsform weist die erfindungsgemäße Zelle mindestens eines der folgenden Merkmale, insbesondere eine Kombination aus den folgenden Merkmalen, auf:
- Der Elektroden-Separator-Verbund liegt in Form eines spiralförmigen Wickels mit zwei endständigen Stirnseiten vor.
- Die aus den endständigen Stirnseiten des Wickels austretenden Längsränder des Anodenstromkollektors und des Kathodenstromkollektors weisen eine spiralförmige Geometrie auf.
- Die Zelle weist eine erste Kontaktplatte auf, die auf dem Längsrand des Anodenstromkollektors aufliegt, so dass sich eine linienartige erste Kontaktzone mit spiralförmiger Geometrie ergibt.
- Die Zelle weist eine zweite Kontaktplatte auf, die auf dem Längsrand des Kathodenstromkollektors aufliegt, so dass sich eine linienartige zweite Kontaktzone mit spiralförmiger Geometrie ergibt.
- Bei dem Anodenstromkollektor und dem Kathodenstromkollektor handelt es sich jeweils um einen Metallschaum.
- Der Längsrand des Anodenstromkollektors ist über eine Vielzahl von Schweißpunkten entlang der Kontaktzone mit der ersten Kontaktplatte verbunden.
- Der Längsrand des Kathodenstromkollektors ist über eine Vielzahl von Schweißpunkten entlang der Kontaktzone mit der zweiten Kontaktplatte verbunden.
- Die Schweißpunkte bilden jeweils mindestens eine Linie, insbesondere mindestens eine Gerade, welche die linienartige erste und die linienartige zweite Kontaktzone kreuzen.

In besonders bevorzugten Ausführungsformen bestehen die erste Kontaktplatte und der Anodenstromkollektor beide aus dem gleichen Material. Dieses wird besonders bevorzugt aus der Gruppe mit Kupfer, Nickel, Titan, vernickeltem Stahl und Edelstahl gewählt.

Die zweite Kontaktplatte und der Kathodenstromkollektor bestehen besonders bevorzugt beide aus dem gleichen Material aus der Gruppe mit Aluminium, Nickel, Titan, vernickelter Stahl und Edelstahl.

Weitere Merkmale der Erfindung sowie aus der Erfindung resultierende Vorteile ergeben sich aus den Zeichnungen sowie aus der nachfolgenden Beschreibung der Zeichnungen. Die nachfolgend beschriebenen Ausführungsformen dienen lediglich zur Erläuterung und zum besseren Verständnis der Erfindung und sind in keiner Weise einschränkend zu verstehen.

In Fig. 1 ist schematisch eine Ausführungsform eines spiralförmigen Wickels 101 dargestellt, der sich zu einer erfindungsgemäßen Zelle verarbeiten lässt. Der Wickel besteht aus einem spiralförmig aufgewickelten Elektroden-Separator-Verbund und weist zwei endständige Stirnseiten auf, von denen nur eine, die Stirnseite 103, in Fig. 1 sichtbar ist.

Der Elektroden-Separator-Verbund weist eine Anode und eine Kathode auf, die innerhalb des Elektroden-Separator-Verbunds versetzt angeordnet sind. Die Anode umfasst einen bandförmigen metallischen Anodenstromkollektor, der mit negativem Elektrodenaktivmaterial beladen ist. Die Kathode umfasst einen bandförmigen metallischen Kathodenstromkollektor, der mit positivem Elektrodenaktivmaterial beladen ist. Bei beiden Stromkollektoren handelt es sich jeweils um einen porösen Metallschaum.

Ein Längsrand 102 des Kathodenstromkollektors tritt aus der Stirnseite 103 aus. Er weist als Folge der spiralförmigen Wicklung des Elektroden-Separator-Verbunds gleichfalls eine spiralförmige Geometrie auf. Der Längsrand des Anodenstromkollektors tritt aus der hier nicht dargestellten zweiten Stirnseite 109 des Wickels 101 aus.

In Fig. 2 ist schematisch eine erste Ausführungsform einer Kontaktplatte 104 dargestellt, die sich zu einer erfindungsgemäßen Zelle verarbeiten lässt. Die Kontaktplatte 104 hat die Form einer flachen Scheibe und weist die weist Schlitze 105a, 105b, 105c und 105d auf. Durch diese Schlitze soll einer unbeabsichtigten Deformation der Kontaktplatte in Folge von Erwärmung, beispielsweise während eines Schweißvorgangs, entgegengewirkt werden.

In Fig. 3 ist schematisch eine nicht erfindungsgemäße Ausführungsform einer Zelle 100 dargestellt. Die Zelle setzt sich aus dem in Fig. 1 dargestellten spiralförmigen Wickel 101 und der in Fig. 2 dargestellten Kontaktplatte 104 zusammen. Die Kontaktplatte ist auf die Stirnseite 103 des Wickels aufgeschweißt. Zur Herstellung der Zelle 101 wird die Kontaktplatte 104 auf die Stirnseite 103 aufgelegt. Durch den Kontakt mit dem spiralförmigen Längsrand 102 ergibtsich eine linienartige Kontaktzone spiralförmiger Geometrie, über die der Längsrand 102 und die Kontaktplatte 104 verbunden sind.

Nach dem Auflegen wird die Kontaktplatte 104 auf dem Längsrand 102 fixiert. Hierzu werden mittels eines Laserstrahls die Kontaktplatte 104 und der Längsrand 102 entlang den Schweißlinien 106a, 106b, 106c und 106d miteinander verschweißt.

Die Schweißlinien 106a, 106b, 106c und 106d bilden Linien, die die linienartige Kontaktzone spiralförmiger Geometrie kreuzen. An jedem Kreuzungspunkt ist der Längsrand 102 mit der Kontaktplatte 104 durch Verschweißung verbunden. Insgesamt ergibt sich hierdurch eine großflächige Anbindung der Kontaktplatte 104 an den Längsrand 102.

In Fig. 4 ist schematisch eine weitere nicht erfindungsgemäße Ausführungsform einer erfindungsgemä-βen Zelle 111 dargestellt. Die Zelle setzt sich gleichfalls aus dem in Fig. 1 dargestellten spiralförmigen Wickel 101 und der in Fig. 2 dargestellten Kontaktplatte 104 zusammen. Durch den Kontakt mit dem spiralförmigen Längsrand 102 ergibt sich auch hier die linienartige Kontaktzone spiralförmiger Geometrie, über die der Längsrand 102 mit der Kontaktplatte 104 verbunden ist. Die Kontaktplatte ist auf die Stirnseite 103 des Wickels entlang den Schweißlinien 107a, 107b, 107c und 107d aufgeschweißt.

Die Schweißlinien 107a, 107b, 107c und 107d bilden hier Geraden, die die linienartige Kontaktzone spiralförmiger Geometrie kreuzen. An jedem Kreuzungspunkt der Geraden mit der linienartigen Kontaktzone ist der Längsrand 102 mit der Kontaktplatte 104 durch Verschweißung verbunden. Insgesamt ergibt sich hierdurch eine großflächige Anbindung der Kontaktplatte 104 an den Längsrand 102.

In Fig. 5 ist schematisch eine bevorzugte Ausführungsform einer erfindungsgemäßen Zelle 112 dargestellt. Die Zelle setzt sich gleichfalls aus dem in Fig. 1 dargestellten spiralförmigen Wickel 101 und der in Fig. 2 dargestellten Kontaktplatte 104 zusammen. Durch den Kontakt mit dem spiralförmigen Längsrand 102 ergibt sich auch hier eine linienartige Kontaktzone spiralförmiger Geometrie, über die der Längsrand 102 mit der Kontaktplatte 104 verbunden ist. Die Kontaktplatte ist auf die Stirnseite 103 des Wickels entlang der Schweißlinie 108, die dem spiralförmigen Verlauf des Längsrandes 102 folgt, aufgeschweißt.

Im Unterschied zur ersten und zur zweiten Ausführungsform bildet die Schweißlinie 108 keine Linie, die die linienartige Kontaktzone spiralförmiger Geometrie kreuzt. Stattdessen folgt die Schweißlinie 108 der linienartigen Kontaktzone und fixiert somit den Längsrand 102 der Länge nach an die Kontaktplatte 104.

Aufgrund der Schlitze 105a bis 105d ist es nicht möglich, dass der Längsrand 102 über seine gesamte Länge durchgehend mit der Kontaktplatte 104 verschweißt ist. Stattdessen umfasst der Längsrand 102 - unterbrochen durch die Schlitze 105a bis 105d - eine Vielzahl von Abschnitten, die jeweils über ihre gesamte Länge über die Schweißnaht 108 entlang der Kontaktzone durchgehend mit der Kontaktplatte 104 verbunden sind.

In Fig. 6 sind schematisch einige Windungen des in Fig. 1 dargestellten Wickels im Querschnitt dargestellt. Zwischen den Windungen des Separators "S" sind abwechselnd bandförmige Kathoden- "+" und bandförmige Anodenwindungen "-" angeordnet. Die Kathode und die Anode umfassen jeweils einen Stromkollektor. Aufgrund einer versetzten Anordnung der Kathode und der Anode innerhalb des Wickels tritt der Längsrand 102 des Kathodenstromkollektors aus der Stirnseite 103 aus während der Längsrand 110 des Anodenstromkollektors aus der Stirnseite 109 austritt.

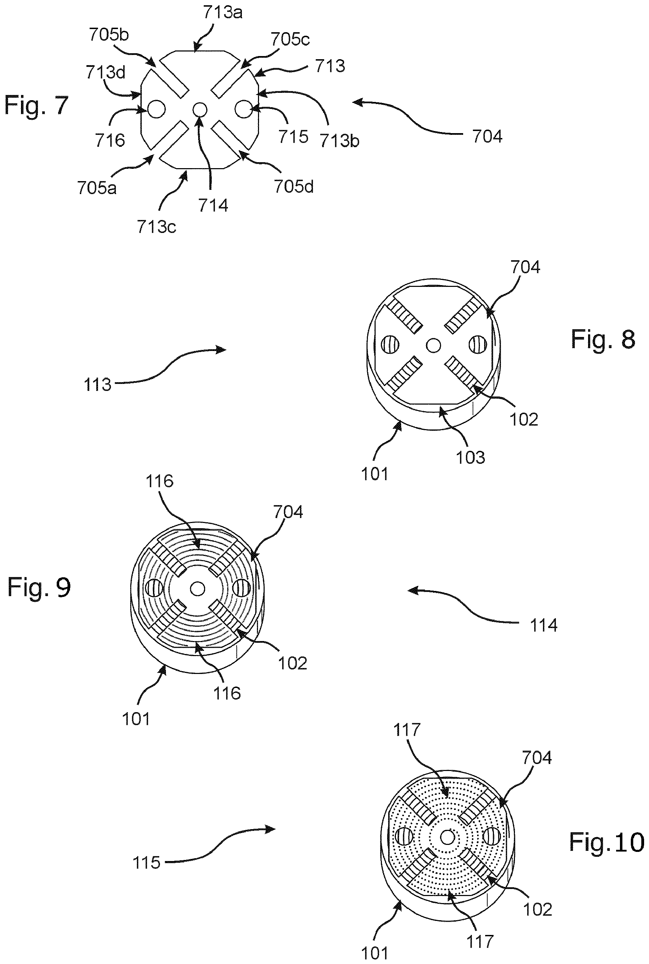

In Fig. 7 ist schematisch eine zweite Ausführungsform einer Kontaktplatte 704 dargestellt, die sich zu einer erfindungsgemäßen Zelle verarbeiten lässt. Die Kontaktplatte 704 ist als näherungsweise kreisförmige Scheibe ausgebildet. Nur näherungsweise deshalb, weil der Scheibenrand 713 an vier Stellen 713a bis 713d, an denen jeweils ein flaches Kreissegment abgetrennt ist, von einer perfekten Kreisgeometrie abweicht.

Die Kontaktplatte 704 weist die Schlitze 705a, 705b, 705c und 705d auf. Die vier Schlitze sind ausgehend von dem äußeren Scheibenrand 713 radial in Richtung des Zentrums der Kontaktplatte ausgerichtet. In ihrem Zentrum weist die Kontaktplatte 704 einen Durchlass 714 in Form eines kreisrunden Lochs auf. Zwei weitere Durchlässe 715 und 716 finden sich rechts und links der zentralen Öffnung 714. Diese können als Positionierungshilfen bei der Montage der Kontaktplatte 704 dienen.

In Fig. 8 ist schematisch ein Zwischenprodukt 113 bei der Herstellung einer erfindungsgemäßen Zelle gemäß Fig. 9 oder einer Zelle gemäß Fig. 10 dargestellt. Das Zwischenprodukt setzt sich aus dem in Fig. 1 dargestellten spiralförmigen Wickel 101 und der in Fig. 7 dargestellten Kontaktplatte 704 zusammen. Die Kontaktplatte 704 ist auf die Stirnseite 103 des spiralförmigen Wickels 103 aufgelegt. Durch den Kontakt mit dem spiralförmigen Längsrand 102 ergibt sich auch hier eine linienartige Kontaktzone spiralförmiger Geometrie, über die der Längsrand 102 mit der Kontaktplatte 704 verbunden ist. Die Weiterverarbeitung des Zwischenprodukts 113 zu einer erfindungsgemäßen Zelle erfolgt durch Verschwei-βen der Kontaktplatte 704 mit dem spiralförmigen Längsrand 102, um die linienartige Kontaktzone zu fixieren.

In Fig. 9 ist schematisch eine weitere Ausführungsform einer erfindungsgemäßen Zelle 114 dargestellt. Die Zelle 114 wurde durch Verschweißung der Kontaktplatte 704 mit dem spiralförmigen Längsrand 102 aus dem Zwischenprodukt 113 gebildet. Verbunden sind die Kontaktplatte 704 und der Längsrand 102 über die Schweißnaht 116. Diese weist hierbei denselben spiralförmigen Verlauf wie der Längsrand 102 auf. Die Schweißnaht folgt exakt dem spiralförmigen Verlauf des Längsrands 102.Auch hier ist es aufgrund der Schlitze 705a bis 705d ist es nicht möglich, dass der Längsrand 102 überseine gesamte Länge durchgehend mit der Kontaktplatte 704 verschweißt ist. Stattdessen umfasst der Längsrand 102 - unterbrochen durch die Schlitze 705a bis 705d - eine Vielzahl von Abschnitten, die jeweils über ihre gesamte Länge über die Schweißnaht 108 entlang der Kontaktzone durchgehend mit der Kontaktplatte 704 verbunden sind.

In Fig. 10 ist schematisch eine nicht erfindungsgemäße Ausführungsform einer erfindungsgemäßen Zelle 115 dargestellt. Die Zelle 115 wurde durch Verschweißung der Kontaktplatte 704 mit dem spiralförmigen Längsrand 102 aus dem Zwischenprodukt 113 gebildet. Verbunden sind die Kontaktplatte 704 und der Längsrand 102 allerdings hier nicht über eine Schweißnahtsondern entlangderspiralförmigen Linie 117, die sich aus einer Vielzahl von einzelnen Schweißpunkten zusammensetzt. Die Linie 117 folgt auch hier exakt dem spiralförmigen Verlauf des Längsrands 102.

Aufgrund der Schlitze 705a bis 705d ist es auch nicht möglich, dass der Längsrand über seine gesamte Länge durchgehend mit der Kontaktplatte 704 verschweißt ist.

## Patentansprüche

1. Elektrochemische Zelle (112; 114) mit den Merkmalen
a. Die Zelle umfasst einen bandförmigen Elektroden-Separator-Verbund (101) der Sequenz Anode / Separator / Kathode,
b. Die Anode umfasst einen bandförmigen metallischen Anodenstromkollektor, der mit negativem Elektrodenaktivmaterial beladen ist,
c. Die Kathode umfasst einen bandförmigen metallischen Kathodenstromkollektor, der mit positivem Elektrodenaktivmaterial beladen ist,
d. Der Elektroden-Separator-Verbund (101) liegt in Form eines Wickels mit zwei endständigen Stirnseiten (103; 109) vor,
e. Die Anode und die Kathode sind innerhalb des Elektroden-Separator-Verbunds (101) versetzt angeordnet, so dass ein Längsrand (110) des Anodenstromkollektors aus einer der endständigen Stirnseiten und ein Längsrand (102) des Kathodenstromkollektors aus der anderen der endständigen Stirnseiten austritt,
f. Die Zelle weist eine Kontaktplatte (104; 704) auf, die auf einem der Längsränder (102) aufliegt, so dass sich eine linienartige Kontaktzone ergibt,
g. Die Kontaktplatte (104; 704) ist mit dem Längsrand (102) entlang der linienartigen Kontaktzone durch Verschweißung verbunden,
h. Die Kontaktplatte (104; 704) weist mindestens einen Schlitz (105a, 105b, 105c, 105d; 705a, 705b, 705c, 705d) und/oder mindestens eine Perforierung auf, und der mindestens eine Schlitz und/oder die mindestens eine Perforierung sind so ausgestattet, dass einer Verformung der Kontaktplatte bei der Herstellung einer Schweißverbindung entgegengewirkt wird,
i. Der Elektroden-Separator-Verbund (101) liegt in Form eines spiralförmigen Wickels vor,
j. Die aus den endständigen Stirnseiten (103; 109) des Wickels austretenden Längsränder (102; 110) des Anodenstromkollektors und des Kathodenstromkollektors weisen eine spiralförmige Geometrie auf, und
k. Die linienartige Kontaktzone, entlang der die Kontaktplatte (104; 704) mit dem Längsrand (102) verschweißt ist, weist eine spiralförmige Geometrie auf, und **dadurch gekennzeichnet, dass**
l. Der Längsrand (102) einen oder mehrere Abschnitte umfasst, die jeweils über ihre gesamte Länge über eine Schweißnaht (108; 116) durchgehend mit der Kontaktplatte (104; 704) verbunden sind, wobei der oder die mit der Kontaktplatte (104; 704) über ihre gesamte Länge durchgehend verbundenen Abschnitte sich über mindestens 25 % der Gesamtlänge des Längsrandes (102) erstrecken.

2. Zelle nach Anspruch 1 mit mindestens einem der folgenden zusätzlichen Merkmale:
a. Der oder die mit der Kontaktplatte über ihre gesamte Länge durchgehend verbundenen Abschnitte erstrecken sich über mindestens 50 %, besonders bevorzugt über mindestens 75 %, der Gesamtlänge des Längsrandes.
b. Der Längsrand ist über seine gesamte Länge durchgehend mit der Kontaktplatte verschweißt.

3. Zelle nach einem der vorhergehenden Ansprüche mit mindestens einem der folgenden zusätzlichen Merkmale:
a. Der Anodenstromkollektor und/oder der Kathodenstromkollektor ist ein Schaum, ein Gewebe, ein Netz, ein Gitter, ein Vlies oder ein Filz.
b. Der Anodenstromkollektor und/oder der Kathodenstromkollektor weist eine Dicke im Bereich von 3 µm bis 700 µm auf.
c. Der Anodenstromkollektor und/oder der Kathodenstromkollektor bestehen aus Aluminium, Titan, Kupfer, Nickel, Edelstahl oder vernickeltem Stahl.

4. Zelle nach einem der vorhergehenden Ansprüche mit mindestens einem der folgenden zusätzlichen Merkmale:
a. Die Kontaktplatte ist eine Metallplatte mit einer Dicke im Bereich von 200 µm bis 1000 µm.
b. Die Kontaktplatte bestehtausAluminium, Titan, Kupfer, Nickel, Edelstahl oder vernickeltem Stahl.

5. Zelle nach einem der vorhergehenden Ansprüche mit mindestens einem der folgenden zusätzlichen Merkmale:
a. Die Zelle weist eine erste Kontaktplatte auf, die auf dem Längsrand des Anodenstromkollektors aufliegt, so dass sich eine linienartige erste Kontaktzone mit spiralförmiger Geometrie ergibt.
b. Die Zelle weist eine zweite Kontaktplatte (104; 704) auf, die auf dem Längsrand (102) des Kathodenstromkollektors aufliegt, so dass sich eine linienartige zweite Kontaktzone mit spiralförmiger Geometrie ergibt.
c. Bei dem Anodenstromkollektorund dem Kathodenstromkollektor handeltessichjeweilsum einen Schaum.
d. Der Längsrand des Anodenstromkollektors umfasst einen oder mehrere Abschnitte, die jeweils über ihre gesamte Länge über eine Schweißnaht entlang der Kontaktzone durchgehend mit der ersten Kontaktplatte verbunden sind.
e. Der Längsrand (102) des Kathodenstromkollektors umfasst einen oder mehrere Abschnitte, die jeweils über ihre gesamte Länge über eine Schweißnaht (108; 116) entlang der Kontaktzone durchgehend mit der zweiten Kontaktplatte (104; 704) verbunden sind.

6. Zelle nach Anspruch 5 mit mindestens einem der folgenden zusätzlichen Merkmale
a. Die erste Kontaktplatte und der Anodenstromkollektor bestehen beide aus dem gleichen Material aus der Gruppe mit Kupfer, Nickel, Titan, vernickelter Stahl und Edelstahl.
b. Die zweite Kontaktplatte und der Kathodenstromkollektor bestehen beide aus dem gleichen Material aus der Gruppe mit Aluminium, Nickel, Titan, vernickelter Stahl und Edelstahl.

## Claims

1. Electrochemical cell (112; 114) having the following features:
a. the cell comprises a band-shaped electrode-separator composite (101) having the sequence anode/separator/cathode,
b. the anode comprises a band-shaped metallic anode current collector laden with negative active electrode material,
c. the cathode comprises a band-shaped metallic cathode current collector laden with positive active electrode material,
d. the electrode-separator composite (101) is in the form of a winding having two terminal end faces (103; 109),
e. the anode and the cathode are arranged offset inside the electrode-separator composite (101), so that a longitudinal edge (110) of the anode current collector exits from one of the terminal end faces and a longitudinal edge (102) of the cathode current collector exits from the other of the terminal end faces,
f. the cell has a contact plate (104; 704) which rests on one of the longitudinal edges (102), thus forming a line-like contact zone,
g. the contact plate (104; 704) is joined to the longitudinal edge (102) by welding,
h. the contact plate (104; 704) comprises at least one slit (105a, 105b, 105c, 105d; 705a, 705b, 705c, 705d) and/or at least one perforation and the at least one slit and/or the at least one perforation are configured to counter a deformation of the contact plate during fabrication of a welded join,
i. the electrode-separator composite (101) is in the form of a spiral winding,
j. the longitudinal edges (102; 110) of the anode current collector and the cathode current collector exiting from the terminal end faces (103; 109) of the winding have a spiral geometry and
k. the line-like contact zone along which the contact plate (104; 704) is welded to the longitudinal edge (102) has a spiral geometry,
and **characterized in that**
l. the longitudinal edge (102) comprises one or more sections each of which are over their total length uninterruptedly joined to the contact plate (104; 704) via a weld seam (108; 116), wherein the section(s) uninterruptedly joined over their total length to the contact plate (104; 704) extend over at least 25% of the total length of the longitudinal edge (102).

2. Cell according to Claim 1, having at least one of the following additional features:
a. The section(s) uninterruptedly joined over their total length to the contact plate extend over at least 50%, particularly preferably over at least 75%, of the total length of the longitudinal edge.
b. The longitudinal edge is over its total length uninterruptedly welded to the contact plate.

3. Cell according to either of the preceding claims, having at least one of the following additional features:
a. The anode current collector and/or the cathode current collector are a foam, a woven fabric, a net, a grid, a nonwoven fabric or a felt.
b. The anode current collector and/or the cathode current collector have a thickness in the range from 3 µm to 700 µm.
c. The anode current collector and/or the cathode current collector are made of aluminium, titanium, copper, nickel, stainless steel or nickel-plated steel.

4. Cell according to any of the preceding claims, having at least one of the following additional features:
a. The contact plate is a metal plate having a thickness in the range from 200 µm to 1000 µm.
b. The contact plate is made of aluminium, titanium, copper, nickel, stainless steel or nickel-plated steel.

5. Cell according to any of the preceding claims, having at least one of the following additional features:
a. The cell has a first contact plate which rests on the longitudinal edge of the anode current collector, thus resulting in a line-like first contact zone of spiral geometry.
b. The cell has a second contact plate (104; 704) which rests on the longitudinal edge (102) of the cathode current collector, thus resulting in a line-like second contact zone of spiral geometry,
c. The anode current collector and the cathode current collector are each a foam.
d. The longitudinal edge of the anode current collector comprises one or more sections each of which are over their total length uninterruptedly joined to the contact plate via a weld seam along the contact zone.
e. The longitudinal edge (102) of the cathode current collector comprises one or more sections each of which are over their total length uninterruptedly joined to the contact plate (104; 704) via a weld seam (108; 116) along the contact zone.

6. Cell according Claim 5, having at least one of the following additional features:
a. The first contact plate and the anode current collector are both made of the same material from the group comprising copper, nickel, titanium, nickel-plated steel and stainless steel.
b. The second contact plate and the cathode current collector are both made of the same material from the group comprising aluminium, nickel, titanium, nickel-coated steel and stainless steel.

## Revendications

1. Cellule électrochimique (112 ; 114) présentant les caractéristiques suivantes :
a. la cellule comprend un composite électrodes-séparateur en forme de bande (101) de la séquence anode/séparateur/cathode,
b. l'anode comprend un collecteur de courant d'anode métallique en forme de bande, qui est chargé de matériau actif d'électrode négatif,
c. la cathode comprend un collecteur de courant de cathode métallique en forme de bande, qui est chargé de matériau actif d'électrode positif,
d. le composite électrodes-séparateur (101) se présente sous forme de bobine présentant deux faces d'extrémité (103 ; 109),
e. l'anode et la cathode sont disposées de manière décalée à l'intérieur du composite électrodes-séparateur (101), de manière à ce qu'un bord longitudinal (110) du collecteur de courant d'anode sorte de l'une des faces d'extrémité et qu'un bord longitudinal (102) du collecteur de courant de cathode sorte de l'autre des faces d'extrémité,
f. la cellule comporte une plaque de contact (104 ; 704) qui repose sur l'un des bords longitudinaux (102), de manière à former une zone de contact linéaire,
g. la plaque de contact (104 ; 704) est reliée par soudure au bord longitudinal (102) le long de la zone de contact linéaire,
h. la plaque de contact (104 ; 704) présente au moins une fente (105a, 105b, 105c, 105d ; 705a, 705b, 705c, 705d) et/ou au moins une perforation, et ladite au moins une fente et/ou ladite au moins une perforation sont prévues pour contrecarrer la déformation de la plaque de contact pendant la formation d'un joint de soudure,
i. le composite électrodes-séparateur (101) se présente sous la forme d'une bobine hélicoïdale,
j. les bords longitudinaux (102 ; 110) du collecteur de courant d'anode et du collecteur de courant de cathode sortant des faces d'extrémité (103 ; 109) de la bobine présentent une géométrie en spirale, et
k. la zone de contact linéaire le long de laquelle la plaque de contact (104 ; 704) est soudée au bord longitudinal (102) présente une géométrie en spirale,
et **caractérisé en ce que**
l. le bord longitudinal (102) comprend une ou plusieurs sections, qui sont respectivement reliées de manière continue à la plaque de contact (104 ; 704) sur toute leur longueur par un cordon de soudure (108 ; 116), dans lequel la ou les sections reliées en continu à la plaque de contact (104 ; 704) sur toute leur longueur s'étendent sur au moins 25 % de la longueur totale du bord longitudinal (102).

2. Cellule selon la revendication 1, présentant au moins l'une des caractéristiques supplémentaires suivantes :
a. la ou les sections reliées de manière continue à la plaque de contact sur toute sa longueur s'étendent sur au moins 50 %, plus préférablement au moins 75 %, de la longueur totale du bord longitudinal,
b. le bord longitudinal est soudé en continu à la plaque de contact sur toute sa longueur.

3. Cellule selon l'une quelconque des revendications précédentes, présentant au moins l'une des caractéristiques supplémentaires suivantes :
a. le collecteur de courant d'anode et/ou le collecteur de courant de cathode est une mousse, un tissu, un filet, une maille, un tissu non tissé ou un feutre,
b. le collecteur de courant d'anode et/ou le collecteur de courant de cathode présente une épaisseur se situant dans la plage de 3 µm à 700 µm,
c. le collecteur de courant d'anode et/ou le collecteur de courant de cathode sont en aluminium, titane, cuivre, nickel, acier inoxydable ou acier nickelé.

4. Cellule selon l'une quelconque des revendications précédentes, présentant au moins l'une des caractéristiques supplémentaires suivantes :
a. la plaque de contact est une plaque métallique dont l'épaisseur se situe dans la plage de 200 µm à 1000 µm,
b. la plaque de contact est en aluminium, titane, cuivre, nickel, acier inoxydable ou acier nickelé.

5. Cellule selon l'une quelconque des revendications précédentes, présentant au moins l'une des caractéristiques supplémentaires suivantes :
a. la cellule comporte une première plaque de contact reposant sur le bord longitudinal du collecteur de courant d'anode, de manière à fournir une première zone de contact linéaire présentant une géométrie en spirale,
b. la cellule comporte une deuxième plaque de contact (104 ; 704) qui repose sur le bord longitudinal (102) du collecteur de courant de cathode, cela conduisant à une deuxième zone de contact linéaire présentant une géométrie en spirale,
c. le collecteur de courant d'anode et le collecteur de courant de cathode sont respectivement une mousse,
d. le bord longitudinal du collecteur de courant d'anode comprend une ou plusieurs sections, qui sont respectivement reliées de manière continue à la première plaque de contact sur toute leur longueur par un cordon de soudure le long de la zone de contact,
e. le bord longitudinal (102) du collecteur de courant de cathode comprend une ou plusieurs sections, qui sont respectivement reliées de manière continue sur toute leur longueur à la deuxième plaque de contact (104 ; 704) par l'intermédiaire d'un cordon de soudure (108 ; 116) le long de la zone de contact.

6. Cellule selon la revendication 5, présentant au moins l'une des caractéristiques supplémentaires suivantes :
a. la première plaque de contact et le collecteur de courant d'anode sont tous deux réalisés dans le même matériau choisi dans le groupe constitué par le cuivre, le nickel, le titane, l'acier nickelé et l'acier inoxydable,
b. la deuxième plaque de contact et le collecteur de courant de cathode sont tous deux constitués du même matériau choisi dans le groupe constitué par l'aluminium, le nickel, le titane, l'acier nickelé et l'acier inoxydable.
